# EUROPÄISCHE PATENTSCHRIFT

(11) **EP 2 620 636 B1**
(45) Veröffentlichungstag und Bekanntmachung des Hinweises auf die Patenterteilung: **13.07.2016**
(21) Anmeldenummer: 12000417.1
(22) Anmeldetag: 24.01.2012
(51) Int. Cl.: F03D 1/00, F03D 80/00, F03D 7/02

(54) **Arretiervorrichtung für einen Triebstrang einer Windenergieanlage**
Stop device for a powertrain of a wind energy assembly
Dispositif d'arrêt pour un embrayage d'une éolienne

(43) Veröffentlichungstag der Anmeldung: 31.07.2013
(73) Patentinhaber: Nordex Energy GmbH, 22419 Hamburg (DE)
(72) Erfinder: Derksen, Juri, 32427 Minden (DE)
(74) Vertreter: Hauck Patentanwaltspartnerschaft mbB

(56) Entgegenhaltungen:
- WO-A2-2010/072190
- WO-A2-2010/102967
- WO-A2-2010/103086
- DE-A1-102007 014 861
- DE-A1-102010 009 050
- DE-A1-102010 020 355
- KR-B1- 100 821 704
- US-A1- 2011 135 481

## Beschreibung

Die vorliegende Erfindung betrifft eine Arretiervorrichtung für einen Triebstrang einer Windenergieanlage.

Zur Durchführung von Wartungs- und Reparaturarbeiten muss der Rotor einer Windenergieanlage formschlüssig arretiert werden. Zu diesem Zweck werden in der Regel Arretiervorrichtungen verwendet, bei denen mindestens ein am Maschinenträger der Windenergieanlage angeordneter Arretierbolzen mit einem mit der Rotorwelle verbundenen Arretierprofil, z.B. einer Arretierscheibe, zusammenwirkt. Zur Aufnahme der Arretierbolzen sind in dem Arretierprofil über den Umfang verteilt eine Anzahl von Arretieröffnungen angeordnet. Um die Rotorwelle zu arretieren, wird der Rotor in eine Position gedreht, die es erlaubt, die Arretierbolzen in die Arretieröffnungen einzuführen.

Mit zunehmender Größe von Windenergieanlagen und einhergehender Vergrößerung der Rotorblattdurchmesser wachsen die Haltemomente, die durch solche Arretiervorrichtungen gehalten werden müssen. Die Haltemomente richten sich dabei maßgeblich nach den aerodynamischen Kräften, die sich aus den maximalen Windgeschwindigkeiten an den Rotorblättern ergeben. Diese steigenden Anforderungen werden zumeist durch eine Erhöhung der Materialstärke der Komponenten der Arretiervorrichtung ausgeglichen. Die hohen Anforderungen an die Fertigungstoleranzen für die Komponenten der Arretiervorrichtung führen bei der zunehmender Materialstärke allerdings zu einem stark ansteigenden Aufwand bei den Herstellungsprozessen dieser Teile.

Durch geringfügige Abweichungen der Fertigungsmaße oder eine schiefe Lage von Arretierbolzen zur Arretieröffnung können bei dem Einführen eines Arretierbolzens in eine Öffnung eines Arretierprofils hohe mechanische Spannungen bzw. Belastungen in der Arretiervorrichtung auftreten. Diese mechanischen Belastungen können zur Verformung bzw. zur Beschädigung einzelner Systemkomponenten des Arretiersystems führen.

Aus US 2010/0021299 A1 ist eine Arretieranordnung für den Rotor einer Windenergieanlage bekannt, bei der ein in einer Führung laufender Arretierbolzen in eine Arretieröffnung an der Rotornabe geschoben wird. Mit Hilfe zweier Keile, die den Arretierbolzen umfassen, wird der Arretierbolzen in radialer Richtung in der Führung verspannt, um eine schiefe bzw. versetzte Ausrichtung des Arretierbolzens zur Arretieröffnung auszugleichen.

Aus DE 101 19 427 A1 ist eine Arretieranordnung zur Arretierung einer Rotorwelle für Windenergieanlagen bekannt, wobei ein Arretierring an der Rotorwelle befestigt ist, welcher umlaufend radial verlaufende Arretieröffnungen aufweist. Zur Arretierung der Rotorwelle werden Arretierbolzen in die Arretieröffnungen geführt, die mit dem Arretierring formschlüssig zusammenwirken und so die Rotorwelle drehfest fixieren.

Aus EP 1 291 521 A1 ist ein Arretiersystem für den Rotor einer Windenergieanlage bekannt, bei dem zur Arretierung des Rotors ein Arretierbolzen in eine Öffnung einer Arretierscheibe geführt wird. Der Arretierbolzen sowie die Öffnung in der Arretierscheibe können eine zueinander korrespondierende abgeschrägte Form aufweisen, um das Einführen des Arretierbolzens bei einer schiefen Ausrichtung zur Bohrung zu erleichtern.

Aus WO 2010/102967 A2 ist eine Arretieranordnung für eine Rotorwelle in einer Windenergieanlage bekannt, bei dem ein Arretierbolzen in einer zur Rotorwelle radialen Richtung verschiebbar ist. Zur Arretierung der Rotorwelle wird der Arretierbolzen senkrecht zur Rotorwelle in eine Bohrung eines an der Rotorwelle befestigten Arretierprofils verschoben. Vorzugsweise sind Arretieröffnung und Arretierbolzen kreisrund. Andere, beispielsweise rechteckige oder ovale Formen können ebenfalls vorgesehen sein. Die Anlageflächen der Arretieröffnung und des Arretierbolzen können konisch ausgebildet sein, um das Einführen des Arretierbolzens bei einer schiefen Ausrichtung zur Arretieröffnung zu erleichtern.

Aus WO 2010/103086 A2 ist eine Rotiervoruchtung zum Rotieren einer Rotornabe oder eines Triebstranges einer Windenergieanlage bekannt, wobei mit dieser Rotiervomichtung auch ein Arretieren der Rotornabe oder des Tuebstranges möglich ist. Hierbei werden zur Arretierung zwei Schrauben oder Stifte benutzt, die in einem schwenkbaren Befestigungselement angeordnet sind.

Aus der US 2011/0135481 A1 ist eine weitere Rotorarretieranordnung für Windenergieanlagen bekannt, bei der Arretierbolzen in Arretieröffnungen einer Rotorarretierscheibe geschoben werden. Die Arretierbolzen sind hierbei an eine Arretierbolzenaufnahme gekoppelt. Zur Ausrichtung eines Arretierbolzens mit einer Arretieröffnung wird die Arretierbolzenaufnahme des Arretierbolzens bezogen auf die Rotorarretierscheibe entsprechend positioniert.

Aus der DE 10 2010 020 355 A1 ist eine Arretiervorrichtung für den Triebstrang von Windenergieanlagen bekannt. Mit dieser Vorrichtung ist es möglich, ohne vorherigen Drehen einer Arretierscheibe mit verschiedenen Arretieröffnungen die Arretierung des Triebstanges vorzunehmen. Hierzu weist ein mit dem Maschinenträger der Windenergieanlage verbundener Tragrahmen ein Schlitz auf, in dem eine Verriegelungseinheit, die einen Arretierbolzen trägt, so verschoben werden kann, dass der Arretierbolzen in eine Arretieröffnung geschoben werden kann.

Der Erfindung liegt die Aufgabe zugrunde, eine Arretiervorrichtung für einen Triebstrang einer Windenergieanlage bereitzustellen, bei der die Haltekraft zum Halten des Triebstrangs in vorteilhafter Weise auf mehrere Halteelemente der Arretiervorrichtung verteilt werden kann und die gleichzeitig eine Reduzierung der mechanischen Spannungen in dem Arretiersystem beim Arretieren des Triebstrangs ermöglicht. Erfindungsgemäß wird die Aufgabe durch eine Arretiervorrichtung mit den Merkmalen aus Anspruch 1 gelöst. Vorteilhafte Ausgestaltungen bilden die Gegenstände der Unteransprüche.

Die erfindungsgemäße Arretiervorrichtung ist für einen auf einem Maschinenträger gelagerten Triebstrang einer Windenergieanlage mit einem Rotor vorgesehen. Die Arretiervorrichtung ist mit einem Befestigungselement, einem Führungselement und mindestens zwei Arretierbolzen sowie einem Arretierprofil mit mindestens zwei Arretieröffnungen ausgestattet. Erfindungsgemäß sind die mindestens zwei Arretierbolzen in Richtung ihrer Längsachse verschiebbar in dem Führungselement angeordnet und jeweils mit einem Endabschnitt in eine der Arretieröffnungen des Arretierprofils einführbar. Die Arretierbolzen sind jeweils in einem vorbestimmten Winkelbereich um ihre Längsachse drehbar. Ferner ist das Führungselement in einem vorbestimmten Winkelbereich schwenkbar an dem Befestigungselement angeordnet. Ein leichter Versatz zwischen Arretieröffnung und Arretierbolzen kann durch Drehbewegungen der Arretierbolzen und des Führungselements ausgeglichen werden. Die erfindungsgemäße Arretiervorrichtung weist vorzugsweise zwei Freiheitsgrade auf, wodurch die Arretierbolzen an der Lage der Arretieröffnungen ausgerichtet werden können. Dies ermöglicht die Verwendung von mindestens zwei Arretierbolzen, die auch dann passgenau in die Arretieröffnungen eingeführt werden können, wenn deren Lage Toleranzen aufweist. Mechanische Spannungen und somit Materialermüdung oder -defekte beim Einführen des Arretierbolzens in die Arretieröffnung können verringert werden.

Erfindungsgemäß stehen die Arretierbolzen jeweils über mindestens ein erstes Koppelelement drehbeweglich mit dem Führungselement in Wirkungsverbindung. Die Arretierbolzen können aus einer Ausgangsstellung links- und/oder rechtsdrehend in dem vorbestimmten Winkelbereich gedreht werden. Durch das entsprechende erste Koppelelement kann der Drehwinkelbereich des jeweiligen Arretierbolzens eingestellt werden. Das erste Koppelelement kann bevorzugt ferner dazu eingesetzt werden, die jeweiligen Arretierbolzen in eine bestimmte Drehlage zu bringen.

Die Arretieröffnungen haben vorzugsweise eine zur Form der entsprechenden Endabschnitte der Arretierbolzen korrespondierende Formgestalt. Alternativ können die Arretieröffnungen eine zur Form der Endabschnitte abweichende Profilgestalt aufweisen, sofern die Arretierbolzen in ihrer eingeführten Position mindestens bereichsweise formschlüssig mit den jeweiligen Arretieröffnungen zusammenwirken. Die Verwendung von mindestens zwei Arretierbolzen bewirkt eine Verteilung der Haltekraft des Rotors auf mehrere Teile der Arretiervorrichtung. Durch eine geringere Krafteinwirkung auf die einzelnen Arretierbolzen kann die Materialstärke der Arretierbolzen verringert werden. Alternativ oder zusätzlich können mehrere Arretierbolzen einer Materialstärke eingesetzt werden, um insgesamt größere Haltekräfte von Rotorkonstruktionen mit höheren Haltemomenten zu kompensieren. Durch die wippende Anordnung des Führungselements an dem Befestigungselement kann ein mechanischer Ausgleich von eventuell unterschiedlichen, auf die Arretierbolzen wirkende Haltekräfte vorgenommen werden. Durch diese Wippenkonstruktion können ebenso Druck- und Zugkräfte ausgeglichen werden, die auf das Führungselement wirken.

In einer bevorzugten Ausgestaltung ist das Befestigungselement an dem Maschinenträger drehfest angeordnet. Das Befestigungselement kann dafür direkt mit dem Maschinenträger verbunden werden, insbesondere kann die Verbindung eine kraftschlüssige Verbindung, beispielsweise eine Schraub- oder Nietverbindung, sein. Alternativ oder zusätzlich kann das Befestigungselement auch stoffschlüssig mit dem Maschinenträger verbunden sein, insbesondere kann das Befestigungselement mit dem Maschinenträger verschweißt sein. Alternativ kann das Befestigungselementintegral mit dem Maschinenträger ausgebildet sein. Eine drehfeste Verbindung des Befestigungselements mit dem Maschinenträger kann ferner indirekt realisiert sein. Beispielsweise kann das Befestigungselement dazu an einer Halterung oder einem Lagergehäuse angeordnet sein, das seinerseits drehfest an dem Maschinenträger angeordnet ist. Das am Maschinenträger drehfest angeordnete Befestigungselement korrespondiert mit dem über den Rotor drehbaren Arretierprofil.

In einer weiteren Ausgestaltung ist das Arretierprofil drehfest an dem Maschinenträger angeordnet. In diesem Fall ist das korrespondierende Befestigungselement drehbar mit dem Rotor verbunden.

In einer weiteren bevorzugten Ausgestaltung sind die Arretierbolzen an ihrem Endabschnitt mit mindestens einer abgeflachten Anlagefläche versehen. Mit einer abgeflachten Anlagefläche können die drehbeweglichen Arretierbolzen beim Einführen in eine korrespondierende Arretieröffnung so ausgerichtet werden, dass eine Schiefstellung zwischen Arretierbolzen und Arretieröffnung ausgeglichen wird. Dazu kann der Arretierbolzen in eine Lage gebracht werden, die der Ausrichtung der Arretieröffnung entspricht. In einer einfachen Ausgestaltung liegt jeder Punkt der abgeflachten Anlagefläche in einer Ebene.

In einer bevorzugten Ausgestaltung verjüngen sich die Endabschnitte hin zu ihrem freien Ende. Die Endabschnitte können beispielsweise konisch ausgebildet sein. Durch an den Endabschnitten schräg verlaufende Anlageflächen können sich die Arretierbolzen beim Einführen in die jeweilige Arretieröffnung an den Anlageflächen der Innenseite der Arretieröffnung ausrichten. Dadurch kann der Endabschnitt des entsprechenden Arretierbolzens auch bei einer Schiefstellung von Arretierbolzen zu Arretieröffnung in die Arretieröffnung eingeführt werden. Die Passgenauigkeit des Endabschnitts zur Arretieröffnung kann somit erhöht werden, um eine verbesserte Wirkverbindung zwischen Arretierbolzen und Arretierprofil herzustellen.

In einer bevorzugten Ausgestaltung sind die Arretieröffnungen des Arretierprofils jeweils mit mindestens einer weiteren abgeflachten Anlagefläche versehen. Mit Hilfe einer abgeflachten Anlagefläche der Arretieröffnungen kann der Endabschnitt eines Arretierbolzens beim Einführen in die jeweilige Arretieröffnung an der Anlagefläche geführt werden. In der Zusammenwirkung abgeflachter Anlageflächen des Arretierbolzens und der Arretieröffnung werden die beim Einführen des Arretierbolzens in die Arretieröffnung auftretenden mechanischen Kräfte bzw. Spannungen zwischen Arretierbolzen und Arretierprofil auf die sich kontaktierenden Anlageflächen des Endabschnitts und der Innenseite der Arretieröffnung verteilt. Eine Punkt- oder Linienkraft an den Anlageflächen des Arretierbolzens und der Arretieröffnung kann so vermieden werden. Stattdessen wirkt an korrespondierenden Anlageflächen eine Flächenkraft. Die auftretenden Kräfte und mechanische Spannungen beim Einführen des Arretierbolzens in die Arretieröffnung können so zumindest bereichsweise flächig auf die Anlagefläche verteilt werden. Dies führt zu einer gleichmäßigeren Kraftverteilung zwischen Arretierbolzen und Arretieröffnungen und zu weniger Materialdefekten bzw. -ermüdung.

Vorzugsweise ist die abgeflachte Anlagefläche der Arretieröffnung länger als die abgeflachte Anlagefläche des Arretierbolzens ausgebildet. Dies ermöglicht einen linearen Ausgleich längs zur abgeflachten Fläche, der wegen Fertigungs- und Montagetoleranzen, bzw. wegen des Kippens des Führungselements erforderlich sein kann.

In einer besonders bevorzugten Ausgestaltung richten sich die Arretierbolzen beim Einführen in die Arretieröffnungen derart aus, dass sie in ihrem eingeführten Zustand jeweils mit der mindestens einen abgeflachten Anlagefläche flächig an der zweiten Anlagefläche an der Innenseite der jeweiligen Arretieröffnung anliegen. Durch den flächigen Kontakt der Anlageflächen wird die durch das Haltemoment des Rotors bedingte Haltekraft auf die gesamte Kontaktfläche gleichmäßig verteilt.

In einer Ausgestaltung ist das Arretierprofil zylinderförmig ausgebildet. Die Mantelfläche des Arretierprofils verläuft dabei im Wesentlichen mit konstantem Abstand zur Längsachse des Rotors. Die Längsachse des Rotors fällt mit der Drehachse des Rotors zusammen. Die Mantelfläche des Arretierprofils kann über ein Trägerelement von dem Rotor in radialer Richtung bezüglich der Längs- bzw. Drehachse des Rotors beabstandet sein. Das Trägerelement und das Arretierprofil können einstückig ausgebildet sein, wobei das Trägerelement drehfest mit dem Rotor der Windenergieanlage verbunden ist. In dieser Ausgestaltung werden die Arretierbolzen radial zur Längsachse des Rotors in das Arretierprofil eingeführt. Durch diese bezüglich der Längsachse des Rotors radiale Anordnung der Arretieröffnungen wird die Haltekraft an einem Punkt des Arretierprofils aufgenommen, der in einer maximalen Entfernung zum Rotor liegt. Dies bedeutet, dass die durch das Haltemoment des Rotors erzeugte Haltekraft an diesem Punkt ihr Minimum erreicht und vorteilhaft durch die Arretiervorrichtung kompensiert werden kann. Alternativ kann die Mantelfläche des Arretierprofils direkt am Rotor oder auf der Rotorwelle angeordnet sein.

Bei Verwendung eines zylinderförmigen Arretierprofils sind die Arretieröffnungen vorzugsweise in im Wesentlichen axialer Richtung bezüglich der Drehachse des Arretierprofils ausgerichtet.

In einer alternativen Ausgestaltung ist das Arretierprofil scheibenförmig ausgebildet und verläuft im Wesentlichen senkrecht zur Längsachse des Rotors. Die scheibenförmige Ausgestaltung des Arretierprofils ermöglicht eine kompakte Anordnung der Arretiervorrichtung in dem Maschinengehäuse der Windenergieanlage. Das Befestigungselement mit dem Führungselement kann dazu unter Ausnutzung des horizontal vorhandenen Raumes im Maschinengehäuse unterhalb des äußeren Randes des Arretierprofils angeordnet werden.

Bei Verwendung eines scheibenförmigen Arretierprofils sind die Arretieröffnungen vorzugsweise in im Wesentlichen radialer Richtung bezüglich der Drehachse des Arretierprofils ausgerichtet.

In einer bevorzugten Ausgestaltung verläuft die Schwenkachse des Führungselements im Wesentlichen senkrecht zum Querschnitt der Arretieröffnungen. Dies bewirkt, dass die Ausrichtung der Längsachsen der Arretierbolzen zu den Arretieröffnuncen auch bei einer Schwenkbewegung des Führungselements beibehalten werden kann.

In einer weiteren bevorzugten Ausgestaltung sind die Längsachsen der mindestens zwei Arretierbolzen jeweils gleichmäßig von der Schwenkachse des Führungselements beabstandet. Dies führt zu einer optimalen Kraftübertragung der Haltekraft von den Arretierbolzen auf das Befestigungselement. In dieser Ausgestaltung kann die Haltekraft zu gleichen Teilen auf die Arretierbolzen verteilt werden. Dieser Effekt wird durch die mechanische Ausgleichbewegung des Führungssystems und der Arretierbolzen beim Einführen der Arretierbolzen in die Arretieröffnungen erzielt.

Alternativ können die Längsachsen der Bolzen mit unterschiedlichem Abstand zur Schwenkachse des Führungselements beabstandet sein. Dies führt zu einer nicht gleichmäßigen Kraftverteilung zwischen den Arretierbolzen bzw. der jeweiligen Ametieröffnungsreihe

In einer bevorzugten Ausgestaltung ist das erste Koppelelement mit mindestens einem Federelement ausgestattet. Damit kann der jeweilige Arretierbolzen in einer nicht eingeführten Position in einer Ausgangsstellung bzw. einer Nennlage gehalten werden. Das Federelement bewirkt ferner, dass der jeweilige Arretierbolzen beim Einführen in die entsprechende Arretieröffnung aus seiner Ausgangslage gegen die Rückstellkraft des Federelements gedreht werden kann. Bei einem Versatz oder einer schiefen Ausrichtung von Arretierbolzen zu Arretieröffnung kann der Arretierbolzen also beim Einführen in eine passende Lage gedreht werden. Bei dieser Ausgestaltung wird ein flächiger Kontakt zwischen den Anlageflächen des jeweiligen Endabschnitts und den Anlageflächen an der entsprechenden Innenseite der Arretieröffnung ermöglicht. Punktuelle oder linienförmige mechanische Spannungen an den Anlageflächen des Arretierbolzens und der Arretieröffnung werden dabei verringert.

In einer weiteren Ausgestaltung steht das Führungselement über mindestens ein zweites Koppelelement drehbeweglich mit dem Befestigungselement in Wirkungsverbindung. Das Führungselement kann aus einer Ausgangsstellung links- und/oder rechtsdrehend in dem vorbestimmten Winkelbereich verschwenkt werden. Durch das zweite Koppelelement kann der Drehwinkelbereich des Führungselements eingestellt werden. Das zweite Koppelelement kann ferner dazu eingesetzt werden, das Führungselement in eine bestimmte Schwenklage zu dringen.

In einer weiter bevorzugten Ausgestaltung ist das zweite Koppelelement mit mindestens einem Federelement ausgestattet. Damit kann das Führungselement in einer nicht eingeführten Position der Arretierbolzen in einer Ausgangsstellung bzw. einer Nennlage gehalten werden. Das Federelement bewirkt ferner, dass das Führungselement beim Einführen der Arretierbolzen in die Arretieröffnungen aus seiner Ausgangslage gegen die Rückstellkraft des Federelements gedreht werden kann. Bei einem Versatz oder einer schiefen Ausrichtung von Arretierbolzen zu Arretieröffnung kann die wippende Bewegung des Führungselements beim Einführen der Arretierbolzen in die Arretieröffnungen unterstützend wirken.

In einer weiter bevorzugten Ausgestaltung sind die mindestens zwei Arretierbolzen parallel zueinander beabstandet in dem Führungselement angeordnet. Alternativ können die Arretierbolzen in einem Winkel zueinander angeordnet sein. Eine parallele Anordnung der Arretierbolzen führt zu einer vereinfachten Ausführung des Arretierprofils und des Führungselements und damit zu einer Vereinfachung der Herstellung dieser Komponenten. Eine Verschränkung der Arretierbolzen zueinander kann hingegen dazu dienen, die Haltekräfte des Rotors vorteilhaft auf das Befestigungselement zu übertragen. Durch geeignete Anpassung des Arretierprofils und des Führungselements können die Haltekräfte in einer Kombination aus Quer-, Druck- und Zugkräften von den Arretierbolzen aufgenommen werden.

In einer bevorzugten Ausgestaltung ist die Arretiervorrichtung mit einem Antrieb ausgestattet, über den die Arretierbolzen jeweils in dem Führungselement verschiebbar sind. Mit Hilfe eines Antriebs kann auf einfache Weise eine in Längsrichtung des Arretierbolzens gerichtete Kraft auf die Arretierbolzen ausgeübt werden, über die die Arretierbolzen in dem Führungselement verschoben werden können. Der Antrieb kann insbesondere ein manueller, ein hydraulischer oder ein elektromechanischer Antrieb sein. Mit Hilfe eines manuellen Antriebs, beispielsweise eine Kurbel oder ein Handrad, können die Arretierbolzen durch Muskelkraft verschoben werden. Bei dieser besonders einfachen Ausgestaltung des Antriebs kann der Triebstrang der Anlage auch bei Wegfall oder Fehlfunktion der Energieversorgung arretiert werden. Der Antrieb kann alternativ und/oder zusätzlich auch als hydraulischer oder elektromechanischer Antrieb ausgebildet sein. Bei dieser Ausgestaltung können die Arretierbolzen unter Einsatz mechanischer oder elektrischer Energie verschoben werden.

In einer weiteren bevorzugten Ausgestaltung liegen die Längsachsen von zwei der mindestens zwei Arretierbolzen in einer Ebene, wobei die Ebene parallel zur Längsrichtung des Rotors verläuft. Die Ebene, die durch die Längsachsen der Arretierbolzen aufgespannt wird, kann dabei in einem Abstand von der Längsachse des Rotors verlaufen. Die Längsachse des Rotors kann in einer abgewandelten Form dieser Ausgestaltung auch vollständig in dieser Ebene liegen.

Die Erfindung wird nachfolgend anhand eines Ausführungsbeispiels näher erläutert. Es zeigt:
- Fig. 1: eine schematische Darstellung der erfindungsgemäßen Arretiervorrichtung,
- Fig. 2: eine schematische Darstellung der Arretiervorrichtung aus Fig. 1 mit einem zylinderförmigen Arretierprofil im arretierten Zustand,
- Fig. 3: eine schematische Schnittdarstellung der Arretiervorrichtung aus Fig. 1 mit einem zylinderförmigen Arretierprofil im arretierten Zustand in der Seitenansicht,
- Fig. 4: eine Arretiervorrichtung in einer schematischen Darstellung mit einem scheibenförmigen Arretierprofil mit radial angeordneten Arretierbolzen in der Draufsicht.

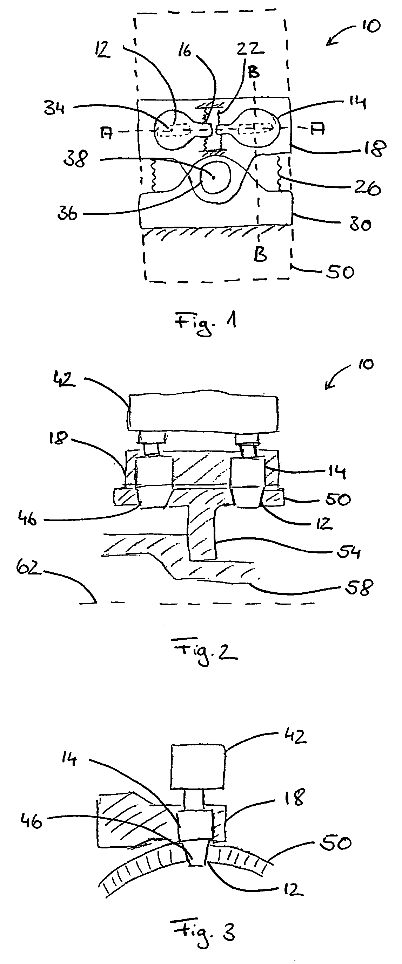

Fig. 1 zeigt eine schematische Darstellung eines zylindrischen Arretierprofils (50) mit paarweise angeordneten Arretieröffnungen (12) und einer über dem Arretierprofil (50) am Maschinenträger (nicht dargestellt) befestigten Arretiervorrichtung 10, welche ein Führungselement 18, in dem zwei Arretierbolzen 14 angeordnet sind, aufweist. An ihrem oberen Ende sind die Arretierbolzen 14 mit nasenförmigen Drehzapfen 16 versehen, an denen beidseitig erste Koppelelemente 22 angeordnet sind. Die Arretierbolzen 14 sind über die ersten Koppelelemente 22 an den Drehzapfen 16 in Drehrichtung um ihre Drehachse 34 federnd gegen das Führungselement 18 abgestützt. Die Drehachsen 34 fallen jeweils mit den Längsachsen der Arretierbolzen 16 zusammen. Das Führungselement 18 ist an seinem unteren Ende mit einer zur Mitte hin sich weiter nach unten erstreckenden Ausformung versehen, in der zentral eine Bohrung vorgesehen ist, die das Schwenklager 36 aufnimmt. Korrespondierend dazu ist das Befestigungselement 30 an seinem oberen Ende mit einer zur Mitte hin sich weiter nach oben erstreckenden Ausformung versehen, in der zentral eine Bohrung vorgesehen ist, in der das Schwenklager 36 angeordnet ist.

Das Führungselement 18 steht über das Schwenklager 36 schwenkbar mit dem Befestigungselement 30 in Wirkverbindung. Das Führungselement 18 ist ferner über zweite Koppelemente 26 in Drehrichtung um die Schwenkachse 38 federnd gegen das Befestigungselement 30 abgestützt. Dazu sind die zweiten Koppelelemente 26 im Randbereich zwischen der Unterseite des Führungselements 18 und der Oberseite des Befestigungselements 30 angeordnet. Anstelle oder neben den Federelementen können die Koppelelemente 22, 26 jeweils auch mechanische Verstellelemente und/oder Dämpfungselemente aufweisen.

Über ein mechanisches Verstellelement (nicht dargestellt) wie z.B. ein Hydraulikzylinder oder eine Gewindespindel lässt sich die Lage der Arretierbolzen 14 und/oder des Führungselements 18 gezielt einstellen. Dies kann z.B. über eine prozessorgestützte Steuerung und/oder über eine manuelle Betätigung durch Bedienpersonal ausgeführt werden. Ein Dämpfungsglied kann eingesetzt werden, um beispielsweise die gefederte Drehbewegung von Arretierbolzen 14 oder Führungselement 18 zu dämpfen. Die Arretierbolzen 14 sind an ihrem freien Ende so geformt, dass sie in Arretieröffnungen 12 einführbar sind und im eingeführten Zustand zumindest bereichsweise formschlüssig mit der Arretieröffnung 12 zusammenwirken.

Fig. 2 zeigt eine erfindungsgemäße Arretiervorrichtung 10 aus Fig. 1 in einer Schnittdarstellung entlang der Schnittebene A-A. Die Arretierbolzen 14 sind in die als Längsloch ausgebildeten Arretieröffnungen 12 eingeführt. Die Arretierbolzen 18 werden über einen Bolzenantrieb 42 in die Arretieröffnungen 12 geschoben. Die Arretierbolzen 14 sind in dem Führungselement 18 geführt und können gleichzeitig oder einzeln über den Bolzenantrieb 42 bewegt werden. Die Arretieröffnungen 12 sind paarweise über den Umfang verteilt in das zylinderförmig ausgebildete Arretierprofil 50 eingelassen. Die Mantelfläche des zylinderförmigen Arretierprofils 50 ist dreh- und bewegungsfest über ein Trägerelement 54 an der Rotorwelle 58 angeordnet. Eine Verbindung des Trägerelements 54 mit der Rotorwelle 58 kann durch eine kraftschlüssige Verbindung insbesondere eine Schraub- oder Nietverbindung hergestellt sein. Alternativ kann das Trägerelement 54 auch stoffschlüssig mit der Rotorwelle 58 verbunden sein, z.B. durch Verschweißen. Die Längsachse der Rotorwelle ist durch die gestrichelt gezeichnete Line 62 angedeutet.

Fig. 3 zeigt eine Schnittdarstellung der erfindungsgemäßen Arretiervorrichtung 10 aus Fig. 1 mit einem scheibenförmig ausgebildeten Arretierprofil 50 in einer Schnittdarstellung entlang der Schnittebene B-B. Eine Vielzahl von Arretieröffnungen 12 sind an der Außenseite des Arretierprofils 50 über den Umfang verteilt eingelassen, so dass es mindestens eine Rotorstellung gibt, in der der Triebstrang der Windenergieanlage (nicht dargestellt) arretiert werden kann. Im arretierten Zustand greifen die Arretierbolzen 14 mit ihren Endabschnitten 46 in die Arretieröffnungen 12 des Arretierprofils 50 ein.

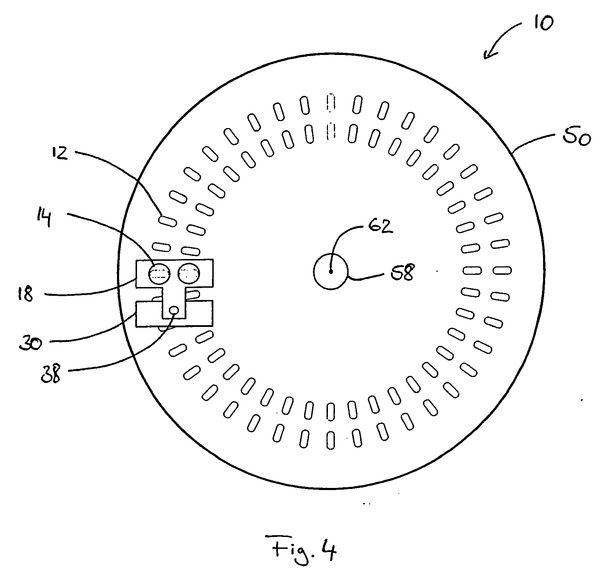

Fig. 4 zeigt eine erfindungsgemäße Arretiervorrichtung mit einem scheibenförmigen Arretierprofil 50. Die Längsachsen der Arretierbolzen 14 spannen eine Ebene auf, in die sowohl die Längsachse 62 der Rotorwelle 58 der Windenergieanlage (nicht dargestellt) als auch ein Normalenvektor dieser Längsachse 62 fällt. Bei der scheibenförmigen Ausgestaltung des Arretierprofils 50 kann die Profilgebung des Arretierprofils 50 sowohl gerade als auch runde Elemente aufweisen. Zur Anpassung an die örtlichen Gegebenheiten und/oder zur mechanischen Auslegung des Arretierprofils 50 kann das Arretierprofil 50 insbesondere Abschnitte enthalten, die im Wesentlichen senkrecht oder in einem Winkel zur axialen Richtung des Arretierprofils 50 verlaufen. Das Arretierprofil 50 kann jedenfalls einen Abschnitt aufweisen, der zur Befestigung an der Rotorwelle 58 dient und einen Abschnitt, in den die Arretieröffnungen 12 eingelassen sind.

### Bezugszeichenliste

- 10: Arretiervorrichtung
- 12: Arretieröffnung
- 14: Arretierbolzen
- 16: Drehzapfen
- 18: Führungselement
- 22: erstes Koppelelement
- 26: zweites Koppelelement
- 30: Befestigungselement
- 34: Drehachse eines Arretierbolzens
- 38: Schwenkachse des Führungselements
- 42: Bolzenantrieb
- 46: Endabschnitt eines Arretierbolzens
- 50: Arretierprofil
- 54: Trägerelement
- 58: Rotorwelle
- 62: Längsachse der Rotorwelle

## Patentansprüche

1. Arretiervorrichtung (10) für einen auf einem Maschinenträger gelagerten Triebstrang einer Windenergieanlage mit einem Rotor (58), aufweisend ein Befestigungselement (30), ein Führungselement (18) und mindestens zwei Arretierbolzen (14) sowie ein Arretierprofil (50) mit mindestens zwei Arretieröffnungen (12), wobei
• die mindestens zwei Arretierbolzen (14) in Richtung ihrer Längsachse verschiebbar in dem Führungselement (18) angeordnet und jeweils mit einem Endabschnitt (46) in eine der Arretieröffnungen (12) des Arretierprofils (50) einführbar sind,
• die Arretierbolzen (14) jeweils um ihre Längsachsen (34) drehbar in dem Führungselement (18) angeordnet sind und
• das Führungselement (18) in einem vorbestimmten Winkelbereich um eine Schwenkachse (38) schwenkbar an dem Befestigungselement (30) angeordnet ist,
**dadurch gekennzeichnet, dass** die Arretierbolzen (14) jeweils über mindestens ein erstes Koppelelement (22) drehbeweglich mit dem Führungselement (18) zusammenwirken und aus einer Ausgangsstellung links- und/oder rechtsdrehend in einem einstellbaren Drehwinkelbereich gedreht werden können

2. Arretiervorrichtung nach Anspruch 1, **dadurch gekennzeichnet, dass** das Befestigungselement (30) drehfest an dem Maschinenträger anordenbar ist.

3. Arretiemomichtung nach Anspruch 1, **dadurch gekennzeichnet, dass** das Arretierprofil (50) drehfest an dem Maschinenträger anordenbar ist.

4. Arretiervorrichtung nach einem der vorhergehenden Ansprüche, **dadurch gekennzeichnet, dass** die Arretierbolzen (14) an ihren Endabschnitten (46) mindestens eine abgeflachte erste Anlagefläche aufweisen.

5. Arretiervorrichtung nach einem der vorhergehenden Ansprüche, **dadurch gekennzeichnet, dass** die Endabschnitte (46) sich zum freien Ende der Arretierbolzen (14) hin verjüngen.

6. Arretiervorrichtung nach einem der vorhergehenden Ansprüche, **dadurch gekennzeichnet, dass** die Arretieröffnungen (12) des Arretierprofils (50) jeweils mindestens eine abgeflachte zweite Anlagefläche aufweisen.

7. Arretiervorrichtung nach Anspruch 6, **dadurch gekennzeichnet, dass** die Arretierbolzen (14) im in die Arretieröffnungen (12) eingeführten Zustand mit mindestens einer abgeflachte ersten Anlagefläche flächig an jeweils mindestens einer abgeflachten zweiten Anlagefläche der Arretieröffnungen (12) anliegen.

8. Arretiervorrichtung nach einem der Ansprüche 1 bis 7, **dadurch gekennzeichnet, dass** das Arretierprofil (50) zylinderförmig ausgebildet ist, wobei das Arretierprofil (50) so in einer Windenergieanlage anordenbar ist, dass die Mantelfläche des Arretierprofils (50) im Wesentlichen parallel zur Umtangsrichtung der Längsachse (62) des Rotors (58) verläuft.

9. Arretiervorrichtung nach Anspruch 8, **dadurch gekennzeichnet, dass** sich die abgeflachten zweiten Anlageflächen der Arretieröffnungen in im Wesentlichen axialer Richtung des zylinderförmigen Arretierprofils erstrecken.

10. Arretiervorrichtung nach einem der Ansprüche 1 bis 7, **dadurch gekennzeichnet, dass** das Arretierprofil (50) scheibenförmig ausgebildet und so in einer Windenergieanlage anordenbar ist, dass das Arretierprofil (50) im Wesentlichen senkrecht zu einer Drehachse des Rotors (58) verläuft.

11. Arretiervorrichtung nach Anspruch 10, **dadurch gekennzeichnet, dass** sich die Arretieröffnungen in im Wesentlichen radialer Richtung des scheibenförmigen Arretierprofils erstrecken.

12. Arretiervorrichtung nach einem der vorhergehenden Ansprüche, **dadurch gekennzeichnet, dass** die Schwenkachse (38) des Führungselements (18) im Wesentlichen senkrecht zum Querschnitt der Arretieröffnungen (12) verläuft.

13. Arretiervorrichtung nach einem der vorhergehenden Ansprüche, **dadurch gekennzeichnet, dass** die Längsachsen der mindestens zwei Arretierbolzen (14) jeweils im gleichen radialen Abstand von der Schwenkachse (38) des Führungselements (18) beabstandet sind.

14. Arretiemomichtung nach Anspruch 1, **dadurch gekennzeichnet, dass** das mindestens eine erste Koppelelement (22) mindestens ein Federelement aufweist.

15. Arretiemomichtung nach einem der vorhergehenden Ansprüche, **dadurch gekennzeichnet, dass** das Führungselement (18) über mindestens ein zweites Koppelelement (26) drehbeweglich mit dem Befestigungselement (30) zusammenwirkt und aus einer Ausgangsstellung links- und/oder rechtsdrehend in dem vorbestimmten Winkelbereich verschwenkt werden kann.

16. Arretiemomichtung nach Anspruch 15, **dadurch gekennzeichnet, dass** das mindestens eine zweite Koppelelement (26) mindestens ein Federelement aufweist.

17. Arretiemomichtung nach einem der vorhergehenden Ansprüche, **dadurch gekennzeichnet, dass** mindestens zwei der Arretierbolzen (14) parallel zueinander und im Abstand voneinander in dem Führungselement (18) angeordnet sind.

18. Arretiervorrichtung nach einem der vorhergehenden Ansprüche, **dadurch gekennzeichnet, dass** mindestens ein Antrieb (42) vorgesehen ist, über den die Arretierbolzen (14) in dem Führungselement (18) verschiebbar sind.

19. Arretiervorrichtung nach einem der vorhergehenden Ansprüche, **dadurch gekennzeichnet, dass** zwei Arretierbolzen so in einer Windenergieanlage anordenbar sind, dass die Längsachsen dieser zwei Arretierbolzen in einer Ebene liegen, wobei die Ebene parallel zur Längsachse (62) des Rotors (58) verläuft.

## Claims

1. A locking device (10) for a drive train of a wind turbine mounted on a machine carrier with a rotor (58), comprising a fastening element (30), a guiding element (18) and at least two locking bolts (14) as well as a locking profile (50) with at least two locking apertures (12), wherein
• the at least two locking bolts (14) are arranged in the guiding element (18) so as to be movable in the direction of their longitudinal axis and each one can be inserted into one of the locking apertures (12) of the locking profile (50) with an end portion (46),
• each locking bolt (14) is arranged in the guiding element (18) so as to be rotatable around its longitudinal axis (34),
• the guiding element (18) is pivotably arranged on the fastening element (30) around a pivotal axis (38) in a predetermined angular range,
**characterised in that** the locking bolts (14) each co-operate rotatably with the guiding element (18) via at least one first coupling element (22) and can be turned counter-clockwise and/or clockwise in an adjustable rotation angle range from a starting position.

2. The locking device according to claim 1, **characterised in that** the fastening element (30) can be arranged on the machine carrier in a rotationally fixed manner.

3. The locking device according to claim 1, **characterised in that** the locking profile (50) can be arranged on the machine carrier in a rotationally fixed manner.

4. The locking device according to any one of the preceding claims, **characterised in that** the locking bolts (14) have at least one flattened first contact surface on their end portions (46).

5. The locking device according to any one of the preceding claims, **characterised in that** the end portions (46) taper towards the free ends of the locking bolts (14).

6. The locking device according to any one of the preceding claims, **characterised in that** the locking apertures (12) of the locking profile (50) each have at least one flattened second contact surface.

7. The locking device according to claim 6, **characterised in that** when the locking bolts (14) are inserted into the locking apertures (12), each contacts at least one flattened second contact surface of the locking apertures (12) with at least one flattened first contact surface over the whole area.

8. The locking device according to any one of the claims 1 to 7, **characterised in that** the locking profile (50) is realised in a cylinder shape, wherein the locking profile (50) can be arranged in a wind turbine such that the shell surface of the locking profile (50) runs essentially parallel to the circumferential direction of the longitudinal axis (62) of the rotor (58).

9. The locking device according to claim 8, **characterised in that** the flattened second contact surfaces of the locking apertures extend in an essentially axial direction of the cylinder-shaped locking profile.

10. The locking device according to any one of the claims 1 to 7, **characterised in that** the locking profile (50) is disc-shaped and can be arranged in a wind turbine such that the locking profile (50) runs essentially vertically to a rotational axis of the rotor (58).

11. The locking device according to claim 10, **characterised in that** the locking apertures extend in an essentially radial direction of the disc-shaped locking profile.

12. The locking device according to any one of the preceding claims, **characterised in that** the pivot axis (38) of the guiding element (18) runs essentially vertically to the cross section of the locking apertures (12).

13. The locking device according to any one of the preceding claims, **characterised in that** the longitudinal axes of the at least two locking bolts (18) are each spaced apart in the same radial distance from the pivot axis (38) of the guiding element (18).

14. The locking device according to claim 1, **characterised in that** the at least one first coupling element (22) comprises at least one spring element.

15. The locking device according to any one of the preceding claims, **characterised in that** the guiding element (18) co-operates rotatably with the fastening element (30) via at least one second coupling element (26) and can be turned counter-clockwise and/or clockwise in the predetermined rotation angle range from a starting position.

16. The locking device according to claim 15, **characterised in that** the at least one second coupling element (26) comprises at least one spring element.

17. The locking device according to any one of the preceding claims, **characterised in that** at least two of the locking bolts (14) are arranged parallel to each other and in a distance from each other in the guiding element (18).

18. The locking device according to any one of the preceding claims, **characterised in that** at least one drive (42) is provided by means of which the locking bolts (14) can be moved in the guiding element (18).

19. The locking device according to any one of the preceding claims, **characterised in that** two locking bolts can be arranged in a wind turbine such that the longitudinal axes of these two locking bolts are in one plane, the plane running parallel to the longitudinal axis (62) of the rotor (58).

## Revendications

1. Dispositif d'arrêt (10) pour une ligne d'entrainement d'une éolienne montée sur un châssis de nacelle avec un rotor (58), comportant un élément de fixation (30), un élément de guidage (18) et au moins deux boulons d'arrêt (14) ainsi qu'un profilé d'arrêt (50) avec au moins deux ouvertures d'arrêt (12), dans lequel
• les au moins deux boulons d'arrêt (14) sont arrangés dans l'élément de guidage (18) étant mobiles dans la direction de leur axe longitudinal et chacun pouvant être inséré dans une des ouvertures d'arrêt (12) du profilé d'arrêt (50) avec une portion d'extrémité (46),
• chaque boulon d'arrêt (14) est tellement arrangé dans l'élément de guidage (18) qu'il peut être tourné autour de son axe longitudinal (34),
• l'élément de guidage (18) est arrangé sur l'élément de fixation (30) de manière pivotante autour d'un axe de pivotement (38) dans une zone angulaire prédéterminée,
**caractérisé en ce que** les boulons d'arrêt (14) coopèrent avec l'élément de guidage (18) de façon tournante, chacun par l'intermédiaire d'au moins un premier élément de couplage (22), et peuvent être tournés à gauche et/ou à droite dans une zone d'angle de rotation ajustable à partir d'une position de départ.

2. Dispositif d'arrêt selon la revendication 1, **caractérisé en ce que** l'élément de fixation (30) peut être arrangé sur le châssis de nacelle de façon bloquée contre la rotation.

3. Dispositif d'arrêt selon la revendication 1, **caractérisé en ce que** le profilé d'arrêt (50) peut être arrangé sur le châssis de nacelle de façon bloquée contre la rotation.

4. Dispositif d'arrêt selon l'une quelconque des revendications précédentes **caractérisé en ce que** les boulons d'arrêt (14) ont au moins une première surface d'appui plate dans leurs portions d'extrémité (46).

5. Dispositif d'arrêt selon l'une quelconque des revendications précédentes **caractérisé en ce que** les portions d'extrémité (46) s'effilent vers les extrémités libres des boulons d'arrêt (14).

6. Dispositif d'arrêt selon l'une quelconque des revendications précédentes, **caractérisé en ce que** les ouvertures d'arrêt (12) du profilé d'arrêt (50) ont chacune au moins une deuxième surface d'appui plate.

7. Dispositif d'arrêt selon la revendication 6, **caractérisé en ce que** quand les boulons d'arrêt (14) sont insérés dans les ouvertures d'arrêt (12), chacun est en appui avec au moins une première surface d'appui plate sur au moins une deuxième surface d'appui plate des ouvertures d'arrêt (12) sur toute la superficie de la surface.

8. Dispositif d'arrêt selon l'une quelconque des revendications 1 à 7, **caractérisé en ce que** le profilé d'arrêt (50) est fait en forme de cylindre, le profilé d'arrêt (50) pouvant être arrangé dans une éolienne tellement que la surface latérale du profilé d'arrêt (50) est essentiellement parallèle à la direction circonférentielle de l' axe longitudinal (62) du rotor (58).

9. Dispositif d'arrêt selon la revendication 8, **caractérisé en ce que** les deuxièmes surfaces d'appui plates des ouvertures d'arrêt s'étendent dans une direction essentiellement axiale du profilé d'arrêt en forme de cylindre.

10. Dispositif d'arrêt selon l'une quelconque des revendications 1 à 7, **caractérisé en ce que** le profilé d'arrêt (50) est en forme de disque et peut être arrangé dans une éolienne tellement que le profilé d'arrêt (50) s'étend essentiellement verticalement à un axe de rotation du rotor (58).

11. Dispositif d'arrêt selon la revendication 10, **caractérisé en ce que** les ouvertures d'arrêt s'étendent dans une direction essentiellement radiale du profilé d'arrêt en forme de disque.

12. Dispositif d'arrêt selon l'une quelconque des revendications précédentes, **caractérisé en ce que** l'axe de pivotement (38) de l'élément de guidage (18) est essentiellement vertical à la section transversale des ouvertures d'arrêt (12).

13. Dispositif d'arrêt selon l'une quelconque des revendications précédentes, **caractérisé en ce que** les axes longitudinaux des au moins deux boulons d'arrêt (18) sont tous espacés en la même distance radiale de l'axe de pivotement (38) de l'élément de guidage (18).

14. Dispositif d'arrêt selon la revendication 1, **caractérisé en ce que** l'au moins un premier élément de couplage (22) comprend au moins un élément de ressort.

15. Dispositif d'arrêt selon l'une quelconque des revendications précédentes, **caractérisé en ce que** l'élément de guidage (18) coopère de façon mobile en rotation avec l'élément de fixation (30) à l'intermédiaire d'au moins un deuxième élément de couplage (26) et peut être tourné à gauche et/ou à droite dans la zone d'angle de rotation prédéterminée à partir d'une position de départ.

16. Dispositif d'arrêt selon la revendication 15, **caractérisé en ce que** l'au moins un deuxième élément de couplage (26) comprend au moins un élément de ressort.

17. Dispositif d'arrêt selon l'une quelconque des revendications précédentes, **caractérisé en ce qu'**au moins deux des boulons d'arrêt (14) sont arrangés en parallèle les uns des autres et en une distance de l'un de l'autre dans l'élément de guidage (18).

18. Dispositif d'arrêt selon l'une quelconque des revendications précédentes, **caractérisé en ce qu'**au moins un entrainement (42) est pourvu par lequel les boulons d'arrêt (14) sont mobiles dans l'élément de guidage (18).

19. Dispositif d'arrêt selon l'une quelconque des revendications précédentes, **caractérisé en ce que** deux boulons d'arrêt peuvent être arrangés dans une éolienne tellement que les axes longitudinaux de ces deux boulons d'arrêt sont dans la même plaine, la plaine étant parallèle à l'axe longitudinal (62) du rotor (58).
